# EUROPÄISCHE PATENTSCHRIFT

(11) **EP 0 401 171 B1**
(45) Veröffentlichungstag und Bekanntmachung des Hinweises auf die Patenterteilung: **27.04.1994**
(21) Anmeldenummer: 90810389.8
(22) Anmeldetag: 29.05.1990
(51) Int. Cl.: F16B 19/14, F16B 15/08

(54) **Trägerstreifen für pulverkraftbetriebene Setzgeräte**
Carrier strip for powder activated driving tools
Bande de support pour appareils de scellement actionnés par poudre

(30) Priorität: 01.06.1989 DE 3917846
(43) Veröffentlichungstag der Anmeldung: 05.12.1990
(73) Patentinhaber: HILTI Aktiengesellschaft, 9494 Schaan (LI)
(72) Erfinder: Pfister, Norbert, CH-9470 Buchs (CH)
(74) Vertreter: Wildi, Roland

(56) Entgegenhaltungen:
- DE-A- 1 625 316
- DE-A- 2 151 051
- FR-A- 2 282 306

## Beschreibung

### Trägerstreifen für pulverkraftbetriebene Setzgeräte

Die Erfindung betrifft einen Trägerstreifen für pulverkraftbetriebene Setzgeräte, mit in gleichmässigen Abständen zueinander angeordneten Aufnahmebohrungen, in denen Nägel verschiebbar gelagert sind, wobei die Nägel einen Kopf und einen Schaft mit einem der Lagerung der Nägel in den Aufnahmebohrungen dienenden Führungselement aufweisen, wobei der Aussendurchmesser des Kopfes höchstens dem Innendurchmesser der Aufnahmebohrungen entspricht.

Aus der DE-A-16 25 316 sind Nägel für Setzgeräte bekannt, wobei der Schaft der Nägel zwei Führungsscheiben reibschlüssig trägt. Der Durchmesser der Führungsscheiben ist gleich dem Durchmesser eines Teiles des Laufs, in den die Nägel einsetzbar sind. Die Führungscheiben sind derartig ausgebildet, dass sie die Nägel zuverlässig in dem Lauf führen. Ihr Abstand voneinander ist derart gross bemessen, dass sie eine ausreichende Gerade-Führung der Nägel gewährleisten.

Aus der DE-A-21 51 051 ist eine Zuführvorrichtung für Nägel eines Setzgerätes bekannt. Die Zuführvorrichtung weist einen Rahmen mit mehreren parallel hintereinander angeordneten Aufnahmebohrungen auf, in denen Nägel angeordnet sind, die einen Kopf und einen Schaft mit Führungselement aufweisen. Das Führungselement besteht aus Kunststoff und übersteigt den Durchmesser der Aufnahmebohrung geringfügig, so dass die Nägel innerhalb dieser Aufnahmebohrung nur unter Überwindung einer bestimmten Reibung axial versetzbar sind. Der Aussendurchmesser des Kopfes der Nägel entspricht höchstens dem Innendurchmesser der Aufnahmebohrungen

Ein aus der nach dem Prioritätstag der vorliegenden Anmeldung veröffentlichten DE-A 38 06 624, bekannter Trägerstreifen mit Nägeln ermöglicht die Verwendung einfacher geräteseitiger Transport- und Arretiereinrichtungen und unterbindet das Auftreten von Leerhüben des geräteseitigen Treibkolbens. Die Nägel sind in Aufnahmebohrungen des Trägerstreifens durch Nutzung der Elastizität des Trägerstreifens reibschlüssig gehalten. Dies erfordert eine präzise Abstimmung von Aufnahmebohrungen und Führungsscheiben.

Der Erfindung liegt die Aufgabe zugrunde, einen Trägerstreifen zu schaffen, der eine Lagerung von Nägeln ohne präzise Abstimmung von Aufnahmebohrungen und Führungsscheiben ermöglicht sowie auch bei starken Erschütterungen oder dergleichen schlagartiger Krafteinwirkung, wie sie im rauhen Baustelleneinsatz auftreten kann, ein Verschieben der Nägel vor dem Setzen verhindert.

Erfindungsgemäss wird dies dadurch erreicht, dass das Führungselement aus zwei im Abstand zueinander angeordneten Führungsscheiben besteht und in sowie entgegen der Setzrichtung die Nägel abstützende Anschläge vorgesehen sind, die mit wengistens einer Führungsscheibe zusammenwirkten., wobei wenigstens der setzrichtungsseitige Anschlag zum Verschieben der Nägel innerhalb der Aufnahmebohrungen unter Setzbedingungen überwindbar ist.

Vor dem Eintreten der Setzbedingungen gewährleisten die Anschläge eine durch Erschütterungen oder dergleichen Krafteinwirkung nicht beeinträchtigte zuverlässige axiale Abstützung der Nägel im Trägerstreifen, selbst wenn der Durchmesser der Aufnahmebohrungen gleich oder geringfügig grösser als der Durchmesser der Führungsscheiben ist. Durch die funktionelle Trennung der Führungs- und Haltefunktion bedarf es bei dem Trägerstreifen keiner präzisen Durchmesserabstimmung der Aufnahmebohrungen mit den Führungsscheiben der Nägel.

Durch die beim Vortreiben des geräteseitigen Treibkolbens auf die Nägel eingeleiteten Axialkräfte werden die Anschläge unter radialer elastischer Verformung des beispielsweise aus Kunststoff bestehenden Trägerstreifens von den Führungsscheiben radial nach aussen gedrängt. Die Nägel mit den Führungsscheiben können so unter Setzbedingungen den Trägerstreifen für den Setzvorgang verlassen.

Zweckmässig ist für jede der Führungsscheiben je ein Anschlag vorgesehen. Die Anschläge können so dem Abstand zwischen den Führungsscheiben entsprechend zueinander in Achsrichtung der Aufnahmebohrung versetzt sein, wodurch die Haltefunktion der Anschläge gegenseitig nicht beeinflusst wird, was insbesondere beim Einführen der Nägel in die Aufnahmebohrungen vorteilhaft ist. Vorzugsweise ist dabei der setzrichtungsseitige Anschlag für die setzrichtugsseitige Führungsscheibe in Setzrichtung und der entgegen der Setzrichtung liegende Anschlag für die entgegen der Setzrichtung angeordnete Führungsscheibe entgegen der Setzrichtung vorgesehen.

Um eine über den Umfang der Aufnahmebohrung möglichst gleichmässige Verteilung der Haltekräfte für die Nägel zu erzielen, ist der in Setzrichtung vorgesehene Anschlag mit Vorteil in seiner der Aufnahmebohrung entsprechenden Axialprojektion zu dem entgegen der Setzrichtung vorgesehenen Anschlag winkelversetzt angeordnet.

Die Anschläge sind vorzugsweise als in die lichte Weite der Aufnahmebohrungen ragende, entlang einer Normalebene zur Achse der Aufnahmebohrungen verlaufende Ringwulste ausgebildet, was zu einer linienförmigen Abstützung der Führungsscheiben führt. Beispielsweise bei Durchmessergleichheit von Aufnahmebohrungen und Führungsscheiben können die Ringwulste zwei oder mehrere Zehntel Millimeter radial in die lichte Weite der Aufnahmebohrungen ragen.

Die Ringwulste erstrecken sich vorteilhaft über einen Umfangswinkel von 30° bis 90°. Durch diese Ausgestaltung der Ringwulste kann deren radiales Einragen in die lichte Weite der Aufnahmebohrungen klein gehalten werden, während gleichzeitig eine ausreichende Abstützung der Führungsscheiben gewährleistet wird.

Um beim Ausstossen der Nägel aus dem Trägerstreifen unter Ueberwindung der Abstützkräfte der Anschläge eine zur Achse der Aufnahmebohrung schräge Krafteinwirkung zu verhindern, sind zweckmässig in Umfangsrichtung der Aufnahmebohrungen zwei oder mehrere Ringwulste angeordnet. So können beispielsweise zwei jeweils einen Anschlag bildende Ringwulste einander diametral gegenüberliegend angeordnet sein. Während ein solches Paar von Ringwulsten die setzrichtungsseitige Führungsscheibe setzrichtungsseitig abstützt, kann ein weiteres Paar Ringwulste die andere Führungsscheibe entgegen der Setzrichtung abstützen. Beide Ringwulst-Paare können zueinander um 90° versetzt angeordnet sein. Die Nägel werden so gleichmässig in den Aufnahmebohrungen gehalten.

Vorteilhaft weisen die Ringwulste in einer entlang der Achse der Aufnahmebohrungen verlaufenden Schnittebene einen sägezahnförmigen Querschnitt auf.

Zweckmässig ist die kurze Sägezahn-Flanke der Anschläge den Führungsscheiben zugewandt. Dadurch wird erreicht, dass nach dem Einführen der Nägel durch Gleiten der Führungsscheiben entlang der langen Sägezahn-Flanke die Führungsscheiben von der kurzen Sägezahn-Flanke der Ringwulste hinterstützt werden. Die kurze Sägezahn-Flanke kann sich normal zur Achse der Aufnahmebohrungen erstrecken, wodurch auch bei sehr kleiner radialer Abmessung der Ringwulste eine entsprechend kraftaufnahmefähige Axialabstützung für die Nägel erzielt wird.

Mit Vorteil sind zwischen den entgegen der Setzrichtung vorgesehenen Ringwulsten zu der entgegen der Setzrichtung gerichteten Stirnseite des Streifens hin offene Durchbrüche vorgesehen, deren entlang der Aufnahmebohrung verlaufende Länge sich von der entgegen der Setzrichtung gerichteten Stirnseite über die entgegen der Setzrichtung vorgesehenen Ringwulste hinaus erstreckt. Die zwischen den Durchbrüchen verbleibenden Teile bilden am Trägerstreifen angelenkte schalenförmige Finger, die elastisch nach aussen biegbar sind. Für das Einführen der Nägel in die Aufnahmebohrungen ist dies von Vorteil, indem die Führungsscheiben die entgegen der Setzrichtung vorgesehenen Ringwulste unter Ausfedern und anschliessendem Rückfedern der Finger passieren können.

Die Erfindung wird nachstehend anhand einer Zeichnung, die ein Ausführungsbeispiel wiedergibt, näher erläutert. Es zeigen:
- Fig. 1: einen Trägerstreifen mit Nägeln, in Ansicht;
- Fig. 2: eine Teil-Ansicht des Trägerstreifens nach Fig. 1, gemäss Sichtpfeil II;
- Fig. 3: einen Schnitt durch den Trägerstreifen, gemäss Schnittverlauf III-III der Fig. 2, in verkürzter und vergrösserter Darstellung;
- Fig. 4: einen Schnitt durch den Trägerstreifen, gemäss Schnittverlauf IV-IV der Fig. 1, in vergrösserter Darstellung.

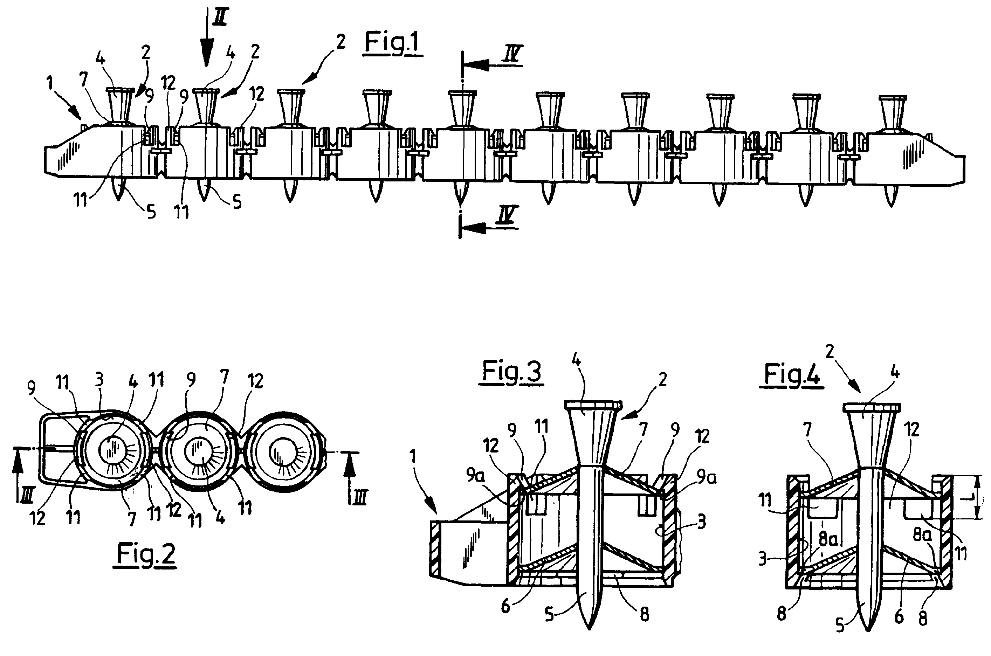

Der in Fig. 1 dargestellte Trägerstreifen 1 dient der Halterung zueinander in gleichmässigen Abständen angeordneter Nägel 2.

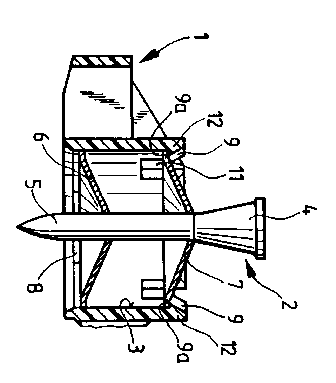

Wie der Fig. 2 zu entnehmen ist, sitzen die Nägel 2 in Aufnahmebohrungen 3 des Trägerstreifens 1. Die in den Fig. 3 und 4 gesamthaft dargestellten Nägel 2 weisen einen Kopf 4 und einen Schaft 5 auf. Auf dem Schaft 5 sitzen, in axialem Abstand zueinander, zwei Führungsscheiben 6, 7 fest. Die Führungsscheiben 6, 7 weisen denselben Durchmesser wie die Aufnahmebohrungen 3 auf und gewährleisten so eine konzentrische achsparallele Führung der Nägel 2 in den Aufnahmebohrungen 3.

Die Führungsscheiben 6, 7 dienen ferner der axialen Halterung der Nägel 2 im Trägerstreifen 1. Hierzu stützen sich die Führungsscheiben 6, 7 an Anschlägen des Trägerstreifens 1 in Form von einander gegenüberliegenden Ringwulsten 8 in Setzrichtung und weiterer Ringwulste 9 entgegen der Setzrichtung axial ab. Die Ringwulste 8 bzw. 9 weisen in einer entlang der Achse der Aufnahmebohrungen 3 verlaufenden Schnittebene gemäss den Fig. 3 und 4 einen sägezahnförmigen Querschnitt auf. Die kürzere Sägezahn-Flanke 8a, 9a ist den Führungsscheiben 6, 7 zugewandt und dient so als Stützschulter.

Der Trägerstreifen 1 ist mit zu der der Setzrichtung abgewandten Stirnseite hin offenen Durchbrüchen 11 mit einer etwa 30% der Länge der Aufnahmebohrungen 3 entsprechenden Länge L versehen. An den zwischen den Durchbrüchen 11 in Umfangsrichtung stehengebliebenen fingerartigen Teilen 12 sind im Bereich des freien Endes innenseitig die der Setzrichtung abgewandten Ringwulste 9 angeordnet. Die einseitig angelenkten Teile 12 federn beim Einführen der Nägel 2 in die Aufnahmebohrungen 3 unter Eingriff der Führungsscheiben 6 radial nach aussen und zum Abstützungszwecke wieder zurück.

## Patentansprüche

1. Trägerstreifen (1) für pulverkraftbetriebene Setzgeräte, mit in gleichmässigen Abständen zueinander angeordneten Aufnahmebohrungen (3), in denen Nägel (2) verschiebbar gelagert sind, wobei die Nägel (2) einen Kopf (4) und einen Schaft (5) mit einem der Lagerung der Nägel (2) in den Aufnahmebohrungen (3) dienenden Führungselement aufweisen, wobei der Aussendurchmesser des Kopfes (4) höchstens dem Innendurchmesser der Aufnahmebohrungen (3) entspricht, **dadurch** **gekennzeichnet,** dass das Führungselement aus zwei im Abstand zueinander angeordneten Führungsscheiben (6, 7) besteht und in sowie entgegen der Setzrichtung die Nägel (2) abstützende Anschläge (8, 9) vorgesehen sind, die mit wenigstens einer Führungsscheibe (6, 7) zusammenwirkten, wobei wenigstens der setzrichtungsseitige Anschlag (8) zum Verschieben der Nägel (2) innerhalb der Aufnahmebohrungen (3) unter Setzbedingungen überwindbar ist.

2. Trägerstreifen nach Anspruch 1, **dadurch gekennzeichnet,** dass für jede der Führungsscheiben (6, 7) je ein Anschlag (8, 9) vorgesehen ist.

3. Trägerstreifen nach Anspruch 2, **dadurch gekennzeichnet,** dass der setzrichtungsseitige Anschlag (8) für die setzrichtungsseitige Führungsscheibe (6) in Setzrichtung und der entgegen der Setzrichtung liegende Anschlag (9) für die entgegen der Setzrichtung angeordnete Führungsscheibe (7) entgegen der Setzrichtung vorgesehen ist.

4. Trägerstreifen nach einem der Ansprüche 1 bis 3, **dadurch gekennzeichnet,** dass der in Setzrichtung vorgesehene Anschlag (8) in seiner der Aufnahmebohrung (3) entsprechenden Axialprojektion zu dem entgegen der Setzrichtung vorgesehenen Anschlag (9) winkelversetzt angeordnet ist.

5. Trägerstreifen nach einem der Ansprüche 1 bis 4, **dadurch** **gekennzeichnet,** dass die Anschläge als in die lichte Weite der Aufnahmebohrungen (3) ragende, entlang einer Normalebene zur Achse der Aufnahmebohrungen (3) verlaufende Ringwulste (8, 9) ausgebildet sind.

6. Trägerstreifen nach Anspruch 5, **dadurch gekennzeichnet,** dass die Ringwulste (8, 9) sich über einen Umfangswinkel von 30° bis 90° erstrekken.

7. Trägerstreifen nach Anspruch 6, **dadurch gekennzeichnet,** dass in Umfangsrichtung der Aufnahmebohrungen (3) zwei oder mehrere Ringwulste (8, 9) angeordnet sind.

8. Trägerstreifen nach Anspruch 6 oder 7, **dadurch** **gekennzeichnet,** dass die Ringwulste (8, 9) in einer entlang der Achse der Aufnahmebohrungen (3) verlaufenden Schnittebene einen sägezahnförmigen Querschnitt aufweisen.

9. Trägerstreifen nach Anspruch 8, **dadurch gekennzeichnet,** dass die kurze Sägezahn-Flanke (8a, 9a) der Ringwulste (8, 9) den Führungsscheiben (6, 7) zugewandt ist.

10. Trägerstreifen nach einem der Ansprüche 7 bis 9, **dadurch gekennzeichnet,** dass zwischen den entgegen der Setzrichtung vorgesehenen Ringwulsten (9) zu der entgegen der Setzrichtung gerichteten Stirnseite (1a) des Streifens (1) hin offene Durchbrüche (11) vorgesehen sind, deren entlang der Aufnahmebohrungen (3) verlaufende Länge (L) sich von der entgegen der Setzrichtung gerichteten Stirnseite (1a) über die entgegen der Setzrichtung vorgesehenen Ringwulste (9) hinaus erstreckt.

## Claims

1. Holding strips (1) for explosively actuated setting tools, comprising receive bores (3) arranged at equal distance to one another, into which nails (2) are displaceably stored, in which respect the nails (2) comprise a head (4) and a shaft (5) with a guide element which serves the storage of the nails (2) in the receiving bores (3), and that the outside diameter of the head (4) corresponds at the most with the inside diameter of the receive bores (3), **characterised** **in that** the guide element comprises two guide discs (6, 7) which are arranged with a gap between them in stops (8, 9) which support the nails (2) against the setting direction and which co-act with at least one guide disc (6, 7), and that at least the stop in the setting direction (8) can be overcome for the purpose of displacing the nails (2) within the receive bores (3) under setting conditions.

2. Holding strip according to claim 1, **characteri****sed in that** one stop (8, 9) is provided for each of the guide discs (6, 7).

3. Holding strip according to claim 2, **characteri****sed in that** that the stop (8) in the setting direction is provided for the guide disc (6) in the setting direction, and the stop (9) opposite the setting direction is provided for the guide disc (7) opposite the setting direction.

4. Holding strip according to one of claims 1 to 3, **characterised in that** the stop (8) in the setting direction is arranged in its axial projection which corresponds with the receive bore (3) angularly transposed to the stop (9) opposite the setting direction.

5. Holding strip according to one of claims 1 to 4, **characterised in that** the stops are arranged as annular beads (8, 9), which protrude into the clearance of the receive bores (3) and extend along a normal plane relative to the axis of the receive bores.

6. Holding strip according to claim 5, **characteri****sed in that** the annular beads (8, 9) extend over a peripheral angle of between 30° and 90°.

7. Holding strip according to claim 6, **characteri****sed in that** two or more annular beads (8, 9) are arranged in the peripheral direction of the receive bores (3).

8. Holding strip according to claim 6 or 7, **charac****terised in that** the annular beads (8, 9) have a sawtooth shaped cross-section along a sectional plane extending along the axis of the receive bores (3).

9. Holding strip according to claim 8, **characteri****sed in that** the short sawtooth flank (8a, 9a) of the annular beads (8, 9) is oriented towards the guide discs (6, 7)

10. Holding strip according to one of claims 7 to 9, **characterised in that** passages, which are open towards the end (1a) of the strip (1) opposite the setting direction, are provided between the annular beads (9) provided opposite the setting direction, and that the length (L) of the passages extending along the receive bores (3) extends from the end (1a) oriented against the setting direction to beyond the annular beads (9) provided opposite the setting direction.

## Revendications

1. Bande de support (1) pour appareils de scellement actionnés par l'énergie de la poudre, présentant à des intervalles réguliers des alésages de réception (3) dans lesquels sont placés de manière mobile des clous (2), les clous (2) comprenant une tête (4) et une tige (5) avec un élément de guidage pour le maintien des clous (2) dans les alésages de réception (3), le diamètre extérieur de la tête (4) correspondant au plus au diamètre intérieur des alésages de réception (3), caractérisée en ce que l'élément de guidage se compose de deux rondelles de guidage (6, 7) disposées à distance l'une de l'autre, et qu'il est prévu des butées (8, 9) lesquelles soutiennent les clous (2) dans le sens opposé à la direction de pose et coopèrent avec au moins une rondelle de guidage (6, 7), au moins la butée (8) du côté pose pouvant être franchie, dans des conditions de pose, pour le déplacement des clous (2) à l'intérieur des alésages de réception (3).

2. Bande de support selon la revendication 1, caractérisée en ce qu'une butée (8, 9) est prévue pour chacune des rondelles de guidage (6, 7).

3. Bande de support selon la revendication 2, caractérisée en ce que la butée (8) du côté pose pour la rondelle de guidage (6) du côté pose est prévue dans la direction de pose, et que la butée (9) située du côté opposé à la direction de pose et destinée à la rondelle de guidage (7) disposée du côté opposé à la direction de pose est prévue du côté opposé à la direction de pose.

4. Bande de support selon l'une quelconque des revendications 1 à 3, caractérisée en ce que la butée (8) prévue du côté pose présente, dans sa projection axiale correspondant à l'alésage de réception (3), un décalage angulaire par rapport à la butée (9) située du côté opposé à la direction de pose.

5. Bande de support selon l'une quelconque des revendications 1 à 4, caractérisée en ce que les butées sont réalisées sous la forme de bourrelets annulaires (8, 9) qui dépassent dans le diamètre intérieur des alésages de réception (3) et s'étendent le long d'un plan perpendiculaire à l'axe des alésages de réception (3).

6. Bande de support selon la revendication 5, caractérisée en ce que les bourrelets annulaires (8, 9) s'étendent sur un angle périphérique de 30° à 90°.

7. Bande de support selon la revendication 6, caractérisée en ce que deux bourrelets annulaires (8, 9) ou plus sont disposés dans le sens circonférentiel des alésages de réception (3).

8. Bande de support selon l'une des revendications 6 ou 7, caractérisée en ce que les bourrelets annulaires (8, 9) présentent une section transversale en dents de scie dans un plan de coupe qui s'étend le long de l'axe des alésages de réception (3).

9. Bande de support selon la revendication 8, caractérisée en ce que le flanc court des dents de scie (8a, 9a) des bourrelets annulaires (8, 9) est dirigé vers les rondelles de guidage (6, 7).

10. Bande de support selon l'une quelconque des revendications 7 à 9, caractérisée en ce que, entre les bourrelets annulaires (9) prévus dans le sens opposé à la direction de pose, sont prévus des ajours (11) ouverts en direction de la surface frontale (1a) de la bande (1) située du côté opposé à la direction de pose, dont la longueur (L) le long des alésage de réception (3) s'étend de la surface frontale (1a) située du côté opposé à la direction de pose jusqu'au-delà des bourrelets annulaires (9) prévus du côté opposé à la direction de pose.
